# EUROPEAN PATENT SPECIFICATION

(11) **EP 1 437 261 B1**
(45) Date of publication and mention of the grant of the patent: **12.09.2007**
(21) Application number: 03257471.7
(22) Date of filing: 27.11.2003
(51) Int. Cl.: B60R 1/12, B60R 1/06, B60R 1/08

(54) **Outer mirrors**
AUSSENSPIEGEL
RETROVISEUR EXTERIEUR

(30) Priority: 20.12.2002 JP 2002369699; 20.12.2002 JP 2002369753; 20.12.2002 JP 2002369879; 20.12.2002 JP 2002369868; 20.12.2002 JP 2002369772
(43) Date of publication of application: 14.07.2004
(73) Proprietor: Murakami Corporation, Shizuoka-shi, Shizuoka (JP)
(72) Inventor: Unno, Noriyuki, Fujieda-shi Shizuoka (JP); Yamana, Tohru, Fujieda-shi Shizuoka (JP); Fukai, Akira, Fujieda-shi Shizuoka (JP); Matsuura, Masaaki, Fujieda-shi Shizuoka (JP); Motomiya, Masahiro, Fujieda-shi Shizuoka (JP)
(74) Representative: Sutcliffe, Nicholas Robert

(56) References cited:
- EP-A- 0 173 309
- EP-A- 0 945 306
- EP-A- 1 122 106
- DE-U- 29 614 664
- JP-A- 11 321 471
- US-A- 2 161 777
- US-A- 3 111 669
- US-A- 5 953 158
- US-A1- 2001 015 862
- US-A1- 2002 141 086
- US-B1- 6 397 137
- PATENT ABSTRACTS OF JAPAN vol. 2000, no. 05, 14 September 2000 (2000-09-14) & JP 2000 062531 A (SONY CORP), 29 February 2000 (2000-02-29)
- PATENT ABSTRACTS OF JAPAN vol. 0100, no. 65 (E-388), 14 March 1986 (1986-03-14) & JP 60 214691 A (NAIRUSU BUHIN KK), 26 October 1985 (1985-10-26)

## Description

This invention relates to an outer mirror (defined as the mirror set close to the driver cabin such as a side mirror and pillar mirror, etc.) and ancillary automobile equipment which is used for the application of the outer mirror. More specifically, the present invention relates to an outer mirror, a automobile application of the outer mirror, and an automobile visual surrounding monitoring device for safety monitoring of the back side of an automobile.

For the general commercial automobiles, a back mirror installed in the front area of the driver cabin and the outer mirror (especially called door mirrors) installed onto the front doors are used for monitoring and safety checking of the back side. The outer mirror comprises a mirror base which is fixed to an outer panel at the triangle area between the lower window frame and a mirror housing fixed to the mirror base.

Drivers use these outer mirrors for the purpose of safety confirmation of the backward drive in backward direction and the right-back and left-back directions and that in right and left turning. However there are dead view angles in using these outer mirrors and there are possibilities of traffic accidents against the peoples walking close to the automobile driven by the driver who cannot be aware of the presence of the walking person. In order to monitor the place in the dead view angles for the outer mirrors, the conventional technologies (see Published Japanese Patent Applications: JP, 2001-130323, A) have been proposed wherein viewing cameras, having different viewing angles, are attached to the cabin and/or the outside of automobiles beneath the mirror bases in addition to the outer mirrors with a freedom in the rotational motion. Therefore, the driver can monitor the views which are not obtained by the outer mirrors, for example the views from the low angle from the automobile bodies. Another implementation of such technologies is to install viewing cameras in the mirror housing which can be rotated for searching and monitoring at the dead view angle (see Published Japanese Patent Applications: JP, 2001-130324, A). Another implementation is to install the viewing cameras in the mirror housing to monitor the forward side which is another dead viewing angle for the monitoring by the outer mirrors (see Published Japanese Patent Applications: JP, 2000-62531, A).

However, the camera installation into the automobile body may make the assembly process of the automobile complicated and the replacement service of the viewing cameras is difficult when the cameras are in trouble.

The viewing cameras attached to the automobiles beneath the outer mirrors have a view angle lower than that of drivers. Therefore a problem is still left, that is, it is difficult to provide the viewing cognition at the same height of drivers' eyes.

The installation of the viewing cameras into the mirror housing needs the electric power supply to the viewing cameras for which the wire harness is set through the hole formed in the shaft of mirror drive. However the quantity of wire harnesses running through the hole is limited by the inner diameter of the hole. Therefore the additional harnesses for the purpose of the viewing camera may sacrifice the other harnesses necessary of realizing the other functionality of the outer mirrors and may need additional laborious assembly works to put thin wire cabling.

Another aspect of the problems is that the mirror housing is necessary to be rotated for every shot of views in addition to the complicate construction of the mirror housing. Therefore the drivers can see only the views of the shots that the cameras have taken during the rotation of the mirror housing. The image of the shot taken by the camera installed in the mirror housing has lower positional viewing angle than that of drivers' sight and therefore the images are not obtained by the obstruction of other automobiles since their bodies and/or the doors obstructing to the viewing cameras when the automobiles are running of parking in parallel.

The viewing cameras installed in mirror housing to monitor the forward side causes the complicate construction of the mirror housing and viewing angles are confined into such forward side of the automobiles. Therefore it is difficult to monitor the scenes in various the dead viewing angles.

In order to address these various problems, the present invention preferably provides a new device that is a surrounding area monitoring device attached to the mirror base without a complicate construction necessary for the case of the camera installation in the mirror housing, wherein the monitoring device can take the scenes in wide range of views at the level of drivers' viewing sights even those in the dead viewing angles in the forward side and backside.

DE-U-29614664 discloses a vehicle mirror comprising a mirror housing mounted on a foot, the foot carrying an ambient light sensor.

US 5953158 discloses a vehicle door mirror assembly comprising a mirror housing which provides a support bracket for a mirror housing, the mirror housing being positioned at the underside of the support bracket.

EP-A-1122106 discloses a surrounding area monitoring device constructed with an outer mirror according to the preamble of claim 1, the assembly having a mirror head which is connected to a mirror body mount on an exterior side of the door. The mirror head includes a video camera device.

EP-A-0945306 discloses a vision system for an industrial vehicle in which a rearview suspension arm carries a camera and a mirror. A fixing hinge joins the arm to the vehicle.

The present invention provides a surrounding area monitoring device according to claim 1.

Then, the installation of the viewing camera can be simplified in comparison to a conventional assembling and construction problem, that is, the viewing camera is installed in the mirror housing with a complicate wire harness and construction. In addition, the viewing camera can monitor the surroundings and surrounding area at the similar height of the driver sight therefore it is possible to monitor the wider range than the camera of the conventional installation can support.

Therefore the areas which are in the dead view angles for the driver sight can be monitored and be checked for the safety by the monitoring camera installed in the mirror base so that it is possible to avoid the accident that happens in the turning and moving backward with lack of viewing check of the drivers in the range of the dead viewing angles. By keeping the mirror bases to which the viewing camera is installed in both sides of the automobile, it is possible to confirm the status of the surroundings when the outer mirrors are stored in the orientation inward the automobile and are housed. In addition, it is possible to confirm the presence of large vehicles such as trucks and traffic signals in the foresight beforehand by installing the surrounding area monitoring device. The scenes monitored by the viewing camera can be presented in the display which is set in the cabin. As an example, when the display is set on the front board on which a speed meter, fuel meter etc. are aligned, the driver can easily check the outside scenery and avoid the traffic accidents such as collisions.

The surrounding area monitoring device according to the present aspect may have plural viewing cameras in the installation.

It is thus possible to monitor not only a single direction of the viewing angle of the viewing camera but also a wide range of the surrounding area by the surrounding area monitoring device that has plural viewing cameras in the mirror base, so that the driver can easily and surely check the surrounding area by means of the viewing cameras. Of cause it is possible to arbitrarily change the direction of the viewing cameras for more specifically or carefully checking.

The viewing cameras of the surrounding area monitoring device according to the present aspect may be installed to have a capability of arbitrarily rotation.

The surrounding area monitoring device according to the present invention has an upper suspension outer mirror that is the mirror housing is suspended by the mirror base. One or more viewing cameras may be installed in the mirror base with rotation capability so that the driver can monitor the surroundings in the similar height of his or her sight and the wider range of surroundings than the viewing angle of his or her sight. Therefore the surrounding area monitoring device realized by the outer mirror can easily monitor the obstacles in the dead viewing angle by rotating the viewing camera. By this flexibility for the wide range of monitoring capability, the devices may serve for preventing the accidents in turning and moving backward. The installation of the viewing cameras into the mirror base is a simpler process and needs less the viewing camera has rotational motion capability. The viewing camera can operate and be usable when the outer mirror is housed to the direction of the automobile body.

The viewing cameras of the surrounding area monitoring device according to the present invention may be installed in the upper direction of the outer side of the mirror base.

The surrounding area monitoring device according to the present aspect may have a viewing camera installed in the upper direction of the outer side of the mirror base so that the viewing angle by the viewing camera is similar to that of the driver. Therefore it can be prevented such that viewing scenery is not blinded by the presence of bodies or doors of other automobiles parked in parallel. Therefore, it is possible to confirm the safety around the automobile since the height of the viewing camera is similar to the driver's sight Therefore the driver can confirm the status of traffic condition without illusion and can early be noticed of the presence of trucks, automobiles and traffic signals in the forward side.
FIG. 1 is a perspective drawing that shows an outer mirror according to an embodiment of the present invention.
FIG. 2 is an exploded perspective drawing that shows a construction of an outer mirror.
FIG. 3 is a perspective drawing that shows an outer mirror to which a CCD camera is attached.
FIG. 4 is a perspective drawing that shows an automobile to which outer mirrors are installed.
FIG. 5 is a schematic shows a display that present a monitoring image taken by the CCD camera.
FIG. 6 is a schematic that shows range of monitoring by the CCD camera attached to an outer mirror.

A surrounding area monitoring device according to an embodiment of the present invention will be explained in detail with reference to the attached drawings. In the explanation, the same codes will be used for the same elements and same discussions will be repeated over the drawings and in the following discussion, respectively. The definition of the words "front", "back", "left", "right", "upper" and "lower" are determined by the nominal figure of the automobile.

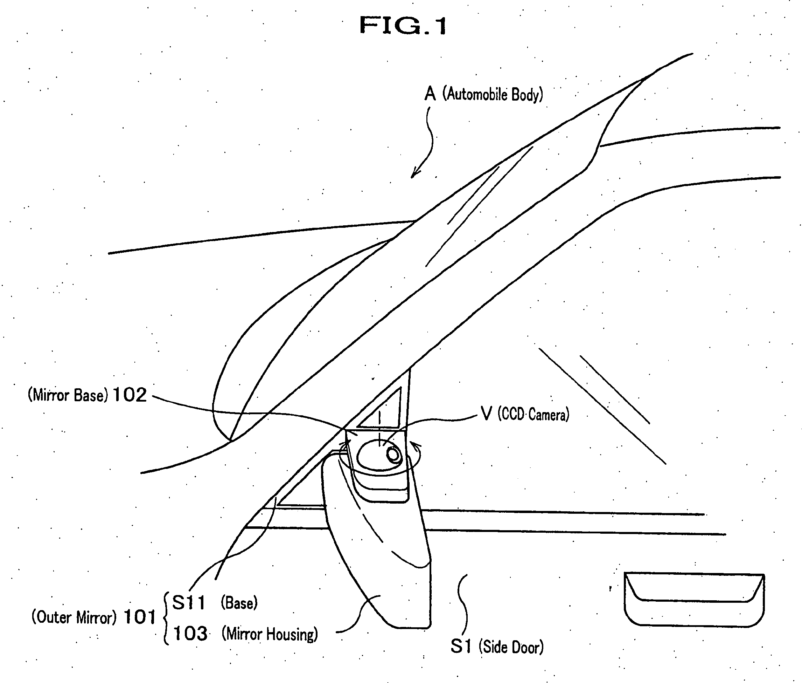

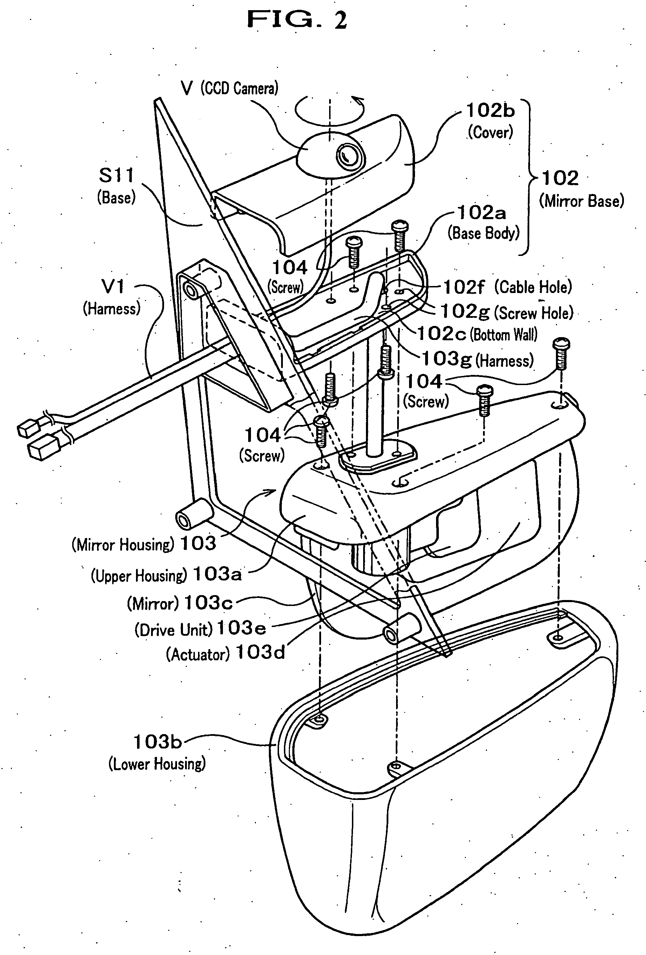

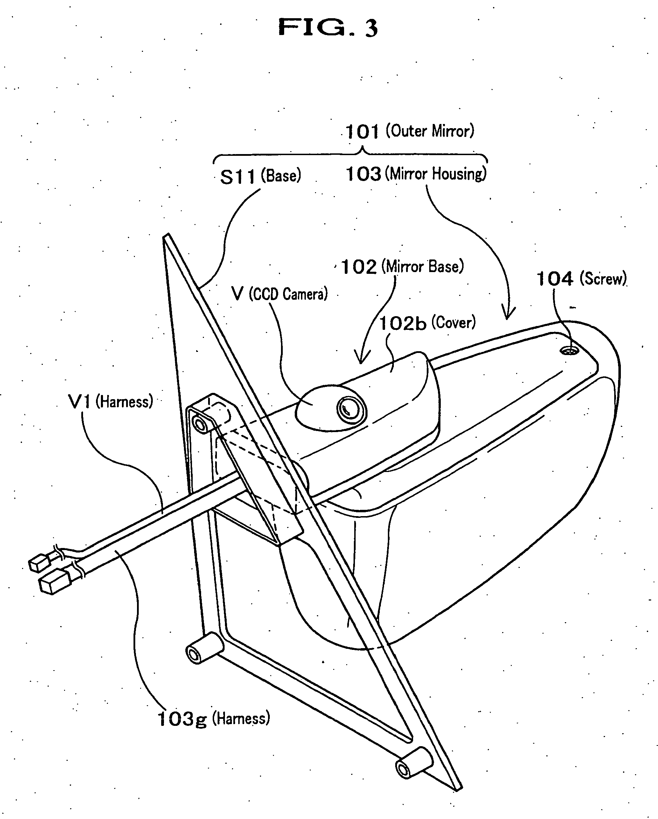

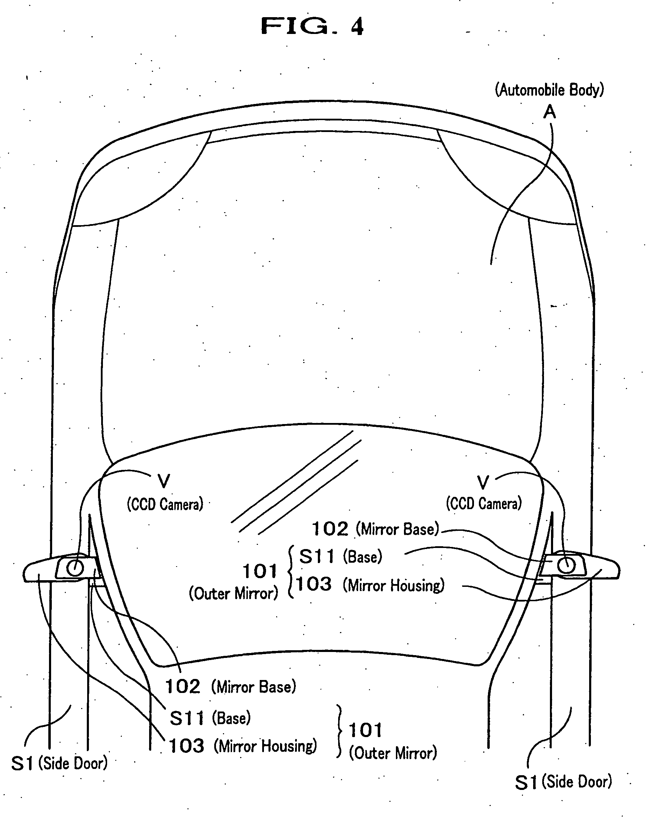

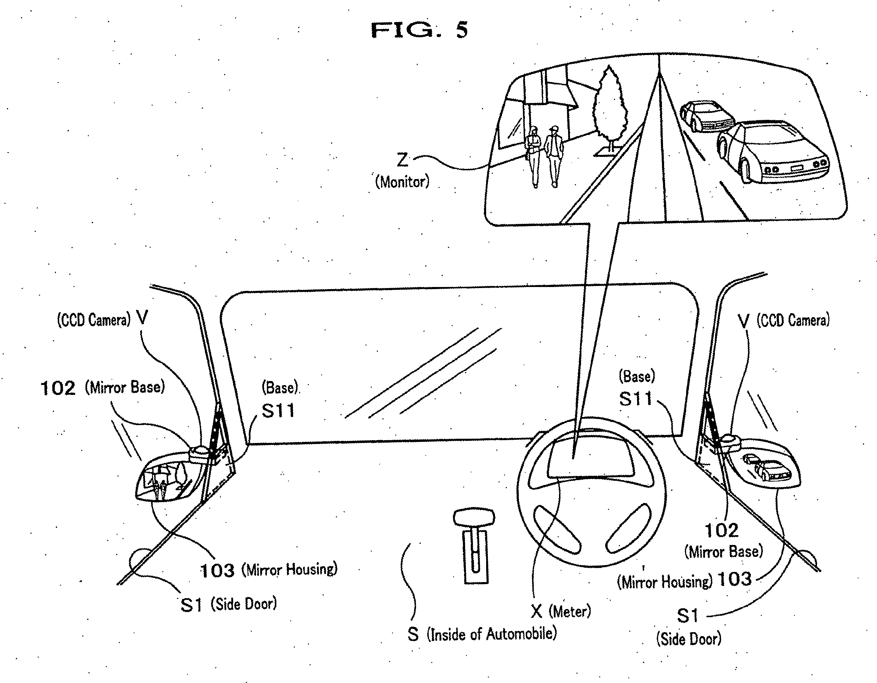

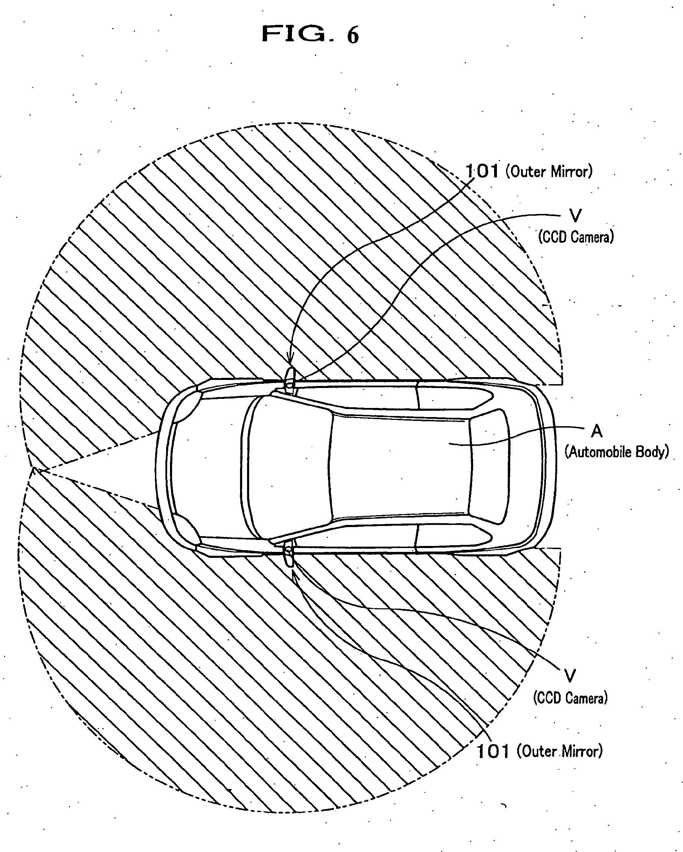

FIG. 1 shows a perspective drawing of an outer mirror according to an embodiment. FIG. 2 is an exploded view of the outer mirror construction. FIG. 3 is a perspective drawing of the outer mirror to which a CCD camera is attached. FIG. 4 shows the system construction of the outer mirror assembled in the automobile. FIG. 5 shows an implementation of the monitor working with the CCD camera. FIG. 6 shows the range of the monitoring scope by using the CCD camera installed in the outer mirror.

The outer mirror according to this embodiment is a door mirror attached to the side door S1 of an automobile body A. The outer mirror comprises a base S11 integrated with a mirror base 102 (a salient bock) extending outward from the side surface of the side door S1 and a mirror housing 103 suspended underneath the mirror housing 103 (see FIG. 2). The outer mirror 101 of the present embodiment is electrically driven to be set back to a housing position and the mirror housing 103 is suspended underneath the mirror base 102 with a rotational flexibility.

The base S11 is made of a plastic and formed into an integrated component with a mirror base 102 (a salient bock) extending outward. As shown in FIG. 1 and FIG. 2, the base S11 is fixed to the front portion of the side door S1. The mirror base 102 consists of a base body 102a which is opened upward and a cover 102b that covers the open portion of the base body 102a.

The base body 102a consists of a bottom surface 102c and the upward standing surface around the peripheral of the bottom surface 102c. A cable hole 102f and screw hole 102g are formed in the bottom surface 102c.

A CCD camera V (an image taking means) is set on the top surface of the cover 102b with a rotational flexibility. The wire harness V1 extending from the CCD camera V is let to the inside of the automobile body.

The cover 102c is fixed to the base body 102a with screws 104. The CCD camera can be rotated by a motor or another rotation means and can be arbitrarily oriented to the object of which image the driver desires to take.

As shown in FIG. 2, the mirror housing 103 is composed of the upper housing 103a and the lower housing 103b which are made of plastic material. The upper housing 103a comprises a mirror 103c for safety check of the backward, oblique-backward and oblique-forward directions, an actuator 103d to adjust the direction of the mirror 103c in upward, downward, leftward or rightward and a drive unit 103e to set the mirror housing 103 back to the automobile. The wire harness 103g that supplies the electrical power to the actuator 103d and the drive unit 103e is installed in the automobile and connected to a connector used for a necessary device for controlling them. The upper housing 103a and the lower housing 103b are assembled with screws 104.

By assembling all components composing the outer mirror 101, an upper suspension outer mirror 101 featuring to have a CCD camera V is equipped on the top surface of the mirror base 102 and the mirror housing is suspended under the mirror base 102 with a rotational flexibility.

An assembly (see FIG. 3) of the outer mirror 101 as explained above can take the image of the surroundings in the side of the automobile by rotating the CCD camera V equipped on the mirror base 102 once it is installed to the side doors S1 close to the driver seat and the passenger seat. As the result, the upper scene is easily viewed since the CCD camera is equipped on the top surface of the mirror base 102 that assists the driver to surely check the traffic signals signs even when the automobile is running after a large trailer or a large truck.

The image taken by the CCD camera V which is installed to the side door S1 of the automobile is displayed on the monitor Z set in the place close to meters X at the front side board at the driver seat in the cabin S. Then, the driver can check the backward and the oblique-back direction without changing his or her sight direction in large angle.

The sight scope to be checked by the CCD camera is not only for the backward or oblique-backward but other directions by rotating the CCD camera V as shown in FIG. 6.

By keeping the mirror base 102 in the width of the automobile, it is possible to check the surroundings and surrounding areas by CCD camera even setting the outer mirror back to the automobile.

As discussed above, the embodiment of a surrounding area monitoring device according to the present invention has been explained, the present invention is applied to various modifications for this embodiment as far as the arts are confined within those involved in the scope of the claims.

For example, the above embodiment implements the CCD cameras set on the top surface of the mirror base 102, however, these cameras can be set under the outer surface of the mirror 102 by which the same effects as in the above embodiment can be obtained.

In addition, the present outer mirror can be integrated with an on-vehicle security system so that the present invention may be widely used. In this application of the present invention, the CCD camera V takes the image in the viewing range when the security system detects the unusualness in the monitored scopes and scenes. Then the image is sent to a security management center where the security manager checks the image and notifies the driver of the risk or danger by sending a signal for sounding a horn. The image taken by the CCD camera can be, if necessary, stored in a recording means which the on-vehicle security system is equipped with. The recording means can be whichever analogue or digital recording device as far as the images taken by the CCD camera V is recorded therein.

The present outer mirror can be used as night viewing monitoring by attaching an infrared camera to the mirror base 2 in addition to the CCD camera so that the image in the night with no surrounding light can be taken.

In stead of rotating the CCD camera V to have wide view of surroundings, a camera that has s wide view lens system, such as a fish-eye lens can serve a similar monitoring capability. The wide view facilitates the monitoring of inside of the cabin. Therefore, the invention can be useful for the preventive security against crime.

For obtaining wide view, another embodiment is possible, wherein plural CCD cameras directing different directions are attached to the mirror base 102.

The construction of the mirror housing is not limited to those explained above as far as it has the capability to install the mirror and the protective function of the components involved therein against the outside environment.

As explained above, the outer mirror according to the present invention can have various advantages. An aspect of these various advantages can be described as installation flexibility of electric monitoring camera allows wide scope of monitoring view and wide applications of image monitoring. In addition the present invention may facilitate the assembly work of the outer mirror in the assembling process of the automobile manufacturing since the mirror base is used with the outer mirror and the outer mirror assembly can be independent from the automobile body manufacturing. It is possible to raise other advantages in accordance with the applications and purposes in use of the present invention.

## Claims

1. A surrounding area monitoring device constructed with an outer mirror (101) that comprises:
a mirror base (102) unrotatably attached to a side of an automobile and extending outward from said side of said automobile;
a mirror housing (103) which is rotatable relative to said mirror base; and
a viewing camera (V);
**characterised in that** said mirror housing is suspended underneath said mirror base, and **in that** said viewing camera is installed in said mirror base.

2. A surrounding area monitoring device as defined in Claim 1, wherein, plural viewing cameras are installed in said mirror base.

3. A surrounding area monitoring device as defined in Claim 1 or Claim 2', wherein, the or each viewing camera is capable of arbitrary rotation.

4. A surrounding area monitoring device as defined in one of Claims 1 to 3 in which the or each viewing camera is attached on an upper surface of said mirror base.

## Patentansprüche

1. Vorrichtung zur Überwachung der Umgebung mit einem Außenspiegel (101), umfassend:
eine Spiegelbasis (102), die nicht-verdrehbar an einer Seite eines Kraftfahrzeugs angebracht ist und sich von der Seite des Kraftfahrzeugs nach außen erstreckt;
ein Spiegelgehäuse (103), welches relativ zur Spiegelbasis verdrehbar ist; und
eine Beobachtungskamera (V);
**dadurch gekennzeichnet, dass** das Spiegelgehäuse unterhalb der Spiegelbasis aufgehängt ist und dass die Beobachtungskamera in der Spiegelbasis angebracht ist.

2. Vorrichtung zur Überwachung der Umgebung nach Anspruch 1, worin mehrere Beobachtungskameras in der Spiegelbasis angebracht sind.

3. Vorrichtung zur Überwachung der Umgebung nach Anspruch 1 oder 2, worin die oder jede Beobachtungskamera willkürlich verdrehbar ist.

4. Vorrichtung zur Überwachung der Umgebung nach einem der Ansprüche 1 bis 3, worin die oder jede Beobachtungskamera an der oberen Oberfläche der Spiegelbasis angebracht ist.

## Revendications

1. Dispositif de surveillance de zone environnante construite avec un miroir externe (101) qui comprend:
une base de miroir (102) fixée de manière non rotative sur un côté d'une automobile et s'étendant vers l'extérieur à partir dudit côté de ladite automobile ;
un boîtier de miroir (103) qui est rotatif par rapport à ladite base de miroir ; et
une caméra d'observation (V) ;
**caractérisé en ce que** ledit boîtier de miroir est suspendu au-dessus de ladite base de miroir, et **en ce que** ladite caméra d'observation est installée dans ladite base de miroir.

2. Dispositif de surveillance de zone environnante selon la revendication 1, dans lequel plusieurs caméras d'observation sont installées dans ladite base de miroir.

3. Dispositif de surveillance de zone environnante selon la revendication 1 ou la revendication 2, dans lequel la ou chaque caméra d'observation est capable de tourner de manière arbitraire.

4. Dispositif de surveillance de zone environnante selon l'une des revendications 1 à 3, dans lequel la ou chaque caméra d'observation est fixée sur une surface supérieure de ladite base de miroir.
